# EUROPEAN PATENT APPLICATION

(11) **EP 2 669 218 A1**
(43) Date of publication of application: **04.12.2013**
(21) Application number: 12170209.6
(22) Date of filing: 31.05.2012
(51) Int. Cl.: B65G 17/06, B65G 23/23

(54) **Airport baggage carousel**

(71) Applicant: CRISPLANT A/S, 8200 Aarhus N. (DK)
(72) Inventor: Lykkegaard, Uffe, 8000 Aarhus C (DK); Jensen, Flemming Max, 8000 Aarhus C (DK)
(74) Representative: Plougmann & Vingtoft A/S

(57) **Abstract**

There is disclosed an airport baggage carousel which as an example may be found to require no or low maintenance, has a low noise level and is safe, e.g. in relation to any risk of personnel injury. The airport baggage carousel includes a track 104 having a curve 212 with a curve radius of less than 1500 mm. The airport baggage carousel comprises an endless loop of a plurality of interconnected links moveable in a moving direction 202 in the track 104 using a propulsion system and wheels, where each link has a length and each link includes a support surface, where the support surface supports a slat 204, 206, 208 for moving baggage on the carousel, and where slats 204, 206, 208 are formed so as to form a baggage carousel with an upwards closed baggage carousel surface for the baggage also during the curve 212 with said curve radius.

## Description

### FIELD OF THE INVENTION

The invention relates to an airport baggage carousel of the kind present in an airport where they are positioned on the floor in a make-up area and/or in an arrival area of the airport.

### BACKGROUND OF THE INVENTION

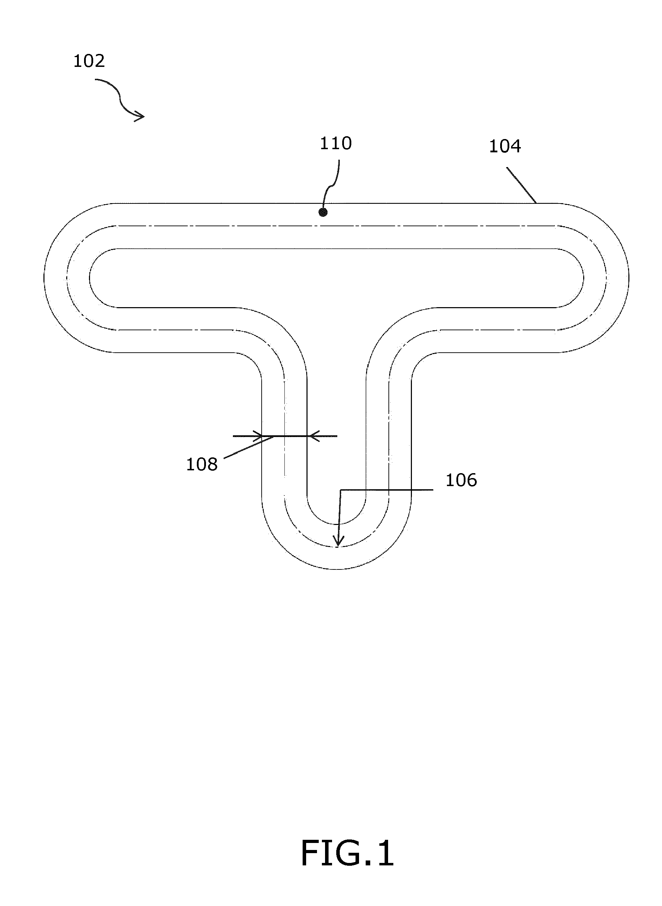

Typically, multiple such baggage carousels are provided adjacent to each other in order to serve multiple planes arriving more or less at the same time. Typically each baggage carousel is a closed loop carousel, as shown in figure 1, thus, a carousel where a piece of baggage will continue to circulate in the loop of the carousel once loaded onto the carousel and until unloaded by a passenger waiting next to the carousel and who has identified his or her baggage on the carousel.

Upon arrival of an airplane the baggage carousel is loaded with baggage from the airplane. The carousel is, e.g., positioned in the arrival area where all the passengers etc. have access to the carousel. Thus, in addition to being able to move the load, i.e. the baggage, to the waiting passengers, such baggage carousel has additional requirements which are of benefit.

Such requirements relate to, among others, low maintenance, low cost, energy efficiency as well as e.g. personnel safety and ability to withstand situations where e.g. persons step onto the airport baggage carousel.

It is seen as disadvantages of existing baggage carousels that they have been found to be prone to one or more of a too high need for maintenance, a too high need of energy to drive the baggage forward, a too high risk of personnel injury and/or a too high level of noise.

Thus, the inventor of the present invention has appreciated that an improved airport baggage carousel is of benefit, and has in consequence devised the present invention.

### SUMMARY OF THE INVENTION

It may be seen as an object of the present invention to provide an improved airport baggage carousel. Preferably, the invention alleviates, mitigates or eliminates one or more of the above or other disadvantages singly or in any combination.

In particular, it may be seen as an object of the invention to provide an airport baggage carousel which requires no or low maintenance, which is safe and has a far better availability than existing baggage carousels.

Accordingly there is provided, an airport baggage carousel with a track having a curve with a curve radius of less than 1500 mm, the airport baggage carousel comprising an endless loop of a plurality of interconnected links moveable in a moving direction in the track using a propulsion system and wheels, where each link has a length and each link includes a support surface, where the support surface supports a slat for moving baggage on the carousel, and where slats are formed so as to form a baggage carousel with an upwards closed baggage carousel surface for the baggage also during a curve with said curve radius, wherein a secondary, movable part of the propulsion system is provided on one or more links, and wherein the secondary part comprises a plurality of permanent magnets arranged after each other in a row in the moving direction, and wherein the secondary moveable part cooperates with one or more primary, stationary parts of the propulsion system, where said one or more primary parts comprises a stator cooperating with the secondary part so as to provide a movement of the secondary part in the moving direction.

Thus, an improved airport baggage carousel is provided. The improvement may lie therein that when the described baggage carousel is provided with the described propulsion system, a baggage carousel with a propulsion system is provided, which propulsion system, until now, has not been considered for a baggage carousel.

When the secondary moveable part of a propulsion system comprises a plurality of permanent magnets arranged after each other in a row in the moving direction and the secondary moveable part cooperates with one or more primary, stationary parts of the propulsion system, where said one or more primary parts comprises a stator cooperating with the secondary part so as to provide a movement of the secondary part in the moving direction, a particular propulsion system is provided for the baggage carousel, which propulsion system requires no or only low level of maintenance. It may be seen that such propulsion system can be of even more and particular interest and effect when used with a baggage carousel with low friction etc. as provided by the baggage carousel disclosed herein.

When the support surface length is at least the same length as the link length, a possible advantage is e.g. that hereby an at least partly maximised support for the slat is provided. It is, e.g., not that easy to achieve such construction in a durable and cost effective way. This is due to factors such as the curve radius of the baggage carousel and the loads that the baggage carousel is subject to.

It has been found that particular benefits are provided when the support surface length is longer than the link length. The lengths are measured as further elaborated herein. A particular form of a particularly long support surface is provided when the support surface comprises one or more protrusions and when the support surface comprises an indentation, and a protrusion of the support surface fits into an indentation of an adjacent support surface when adjacent links with their adjacent supporting surfaces move through said curve. The protrusions may protrude and fit into indentions in a support surface in front of them when seen in the moving direction or alternatively, the protrusions protrude backwards and fits into indentations in a support surface behind them.

A particularly construction which has, e.g., been found to require low maintenance and to require a low level of energy when used is when the indentation has a form so that a line perpendicular to the moving direction and across the indentation intersects an edge of the indentation at two points. The lower level of energy used may e.g. be due to the slats not being able to bend downwards. This may be seen to be due to the indentations and protrusions keeping the form of the slats substantially unchanged also when various loads are applied to the slats in various areas of the carousel.

An improvement of the present baggage carousel may lie therein that when the carousel is provided as disclosed, an airport baggage carousel which requires no or low maintenance and which is safe for the passengers to use is provided. It may also be seen that when the dimensions, forms and relative positions of the links, support surfaces, slats, sliding surfaces etc. are as elaborated herein one or more synergetic effects are obtained.

The one or more synergetic effects may be that a reduced amount of friction is caused by the construction, an optimised strength is provided, an optimised number of parts are used, and a reduced level of maintenance is required over the years to keep the baggage carousel up and running.

It may especially be seen that when the slats have a relative position, size and a shape so that three slats arranged after each other at least partly overlaps each other in the area towards the inner curvature of the curve with the mentioned curve radius, a baggage carousel is provided so that two slats overlap properly towards an outer curvature of the curve. Hereby it is assured that the baggage carousel requires a low amount of maintenance and is safe.

An embodiment of the present invention is obtained when the airport baggage carousel is provided with slats with a slat length which is the same as the support surface length or longer than the support surface length.

An embodiment of the present invention is obtained when the airport baggage carousel is provided with slats that are supported so as to be slightly tilted from horizontal and so that they are hereby adapted to overlap each other. A possible advantage hereby can be seen to be that such arranged slats are less prone to damage and thus may be seen to require less maintenance than other types of slats.

When each link is having a link length of at least 400 mm an embodiment of the present invention is provided. Such link length has been found to be far longer than links in existing baggage carousels, which length is typically in the interval 200-250 mm. Despite the additional at least 50% of length, when compared to the existing links, a part of the insight herein is that it has been found that such long links can be applied in baggage carousels which have a rather limited curve radius of less than 1500 mm. It may be found that an increased length of the link increases an electrical efficiency of the propulsion system.

In accordance with embodiments of the invention a ratio of the link length divided by a slat width is at least 0.4, such as at least 0.45.

When an edge of a slat in at least one of a back edge and a front edge, when seen in the moving direction, is provided with a concave form a possible advantage may be seen to be that hereby provision of an increased area of an adjacent support surface can be obtained.

When both the back edge and the front edge, when seen in the moving direction, are provided with a concave form, a particular embodiment of the present invention is provided. It may be that the concave front and/or back edge form enables that baggage remains on the carousel, and do e.g. not fall off the carousel, e.g. due to numerous recirculations on the carousel and due to rather long links with the similarly rather long slats move relatively much to each other.

Keeping the baggage on the carousel may be seen as the result of the concave shape tending to push the baggage towards the middle of the width of the carousel upon movement of the links with the slats through a curve of the carousel. This may be seen as a benefit of the carousel and enable to provide a carousel without upwards extending railings preventing the baggage from falling off the carousel, towards one or both sides of the carousel.

When each link includes a horizontal wheel towards a left side of the link and a horizontal wheel towards a right side of the link, and each link includes a vertical wheel towards a left side of the link and a vertical wheel towards a right side of the link, where the vertical wheels are hinged so that they are able to follow the track, a particular suited construction for a robust baggage carousel, which e.g. enables improved use of a precise and energy efficient propulsion system.

When the link and the support surface are comprised in one monolithic structure, a possible advantage of the baggage carousel may be seen to be that even less components are present in the system.

When the track comprises a first sliding surface towards a first side of the track and a second sliding surface towards a second surface of the track, on which first and second sliding surfaces the slats slide and are at least partly supported at least when load is applied to the slats, a possible advantage may be seen that further support for the slat is obtained.

By referring to an advantage herein, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 is a top view of an airport baggage carousel,
FIG. 2 is a top view of a curve of the airport baggage carousel,
FIG. 3 is a close up of a part of the top view shown in figure 2,
FIG. 4 is the top view in figure 2 where also support surfaces and links etc. are shown,
FIG. 5 is a top view of the baggage carousel in a straight section of the carousel,
FIG. 6 is a top view and a side view of the straight section of the track,
FIG. 7 is the side view of the straight section of the track shown in figure 5 where also support surfaces and links etc. are shown,
FIG. 8 is the top view and a side view of the link,
FIG. 9 is a cross-sectional view of the baggage carousel perpendicular to a moving direction of the baggage carousel,
FIG. 10 is a top view of a baggage carousel with slats with concave front edges,
FIG. 11 is a top view of the carousel in figure 10 although with transparent slats,
FIG. 12 is a top view of a baggage carousel with slats with straight front and back edges,
FIG. 13 is a top view of the carousel in figure 12 although with transparent slats,
FIG. 14 is a top view of a baggage carousel where each of the slats has a front edge with slat protrusions, and
FIG. 15 is a top view of the carousel of figure 14, although with transparent slats, where it is shown that support surfaces are provided with protrusions and indentations in the support surface.

### DESCRIPTION OF EMBODIMENTS

FIG. 1 is a top view of an airport baggage carousel 102. Such baggage carousels are typically positioned on the floor in an arrival area or a make-up area.

Typically, and in particular in the arrival area, multiple such baggage carousels are provided adjacent to each other in order to serve multiple planes arriving more or less at the same time.

Typically, each baggage carousel is a closed loop carousel, as shown in figure 1, thus, a carousel where a piece of baggage will continue to circulate in the loop of the carousel once loaded onto the carousel and until unloaded by a passenger waiting next to the carousel and who has identified his or her baggage on the carousel. In some airports, one or more carousels are also present which carousels have both left and right curves, such as the baggage carousel shown in figure 1.

In order to have as many carousels as possible on as little floor space as possible and/or in order to increase a floor space in between multiple carousels, for passengers to get to and from a given baggage carousel with their baggage, which baggage they have manually collected from the baggage carousel, a curve radius 106 of the baggage carousel is as shown less than 1500 mm, and in figure 1 illustrated as 1200 mm. The width 108 of the illustrated embodiment of the carousel is about 1050 mm.

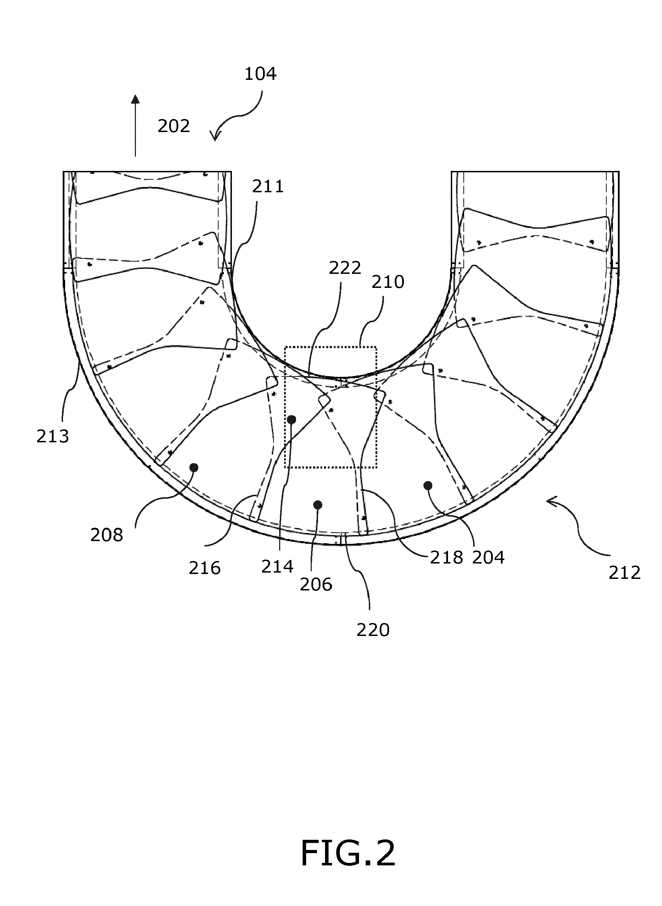

FIG. 2 is a top view of a 180 degrees right curve 212 of the airport baggage carousel. The closed loop of the baggage carousel is fitted with slats all along its length and as illustrated a plurality of such slats are referenced to with the numbers 204, 206, 208 and are provided in the curve 212 of the track 104. The slats are moveable in a moving direction 202. The slats are provided so as to form a baggage carousel with an upwards closed baggage carousel surface 110 for the baggage.

Thus, the baggage carousel surface 110 is closed in order for any baggage and/or part of the baggage, such as any thongs etc. thereof, to be prevented from entering a space below the baggage carousel surface. This is further provided in order to prevent any injury to persons present at the carousel, such as any squeeze of fingers of such persons between slats moving relatively to each other and/or between a moving slat and a stationary part of the carousel.

The baggage carousel is furthermore constructed so as to endure loads exceeding 100 kg of baggage per meter length of the baggage carousel, and also to endure adults and/or children occasionally stepping onto the baggage carousel and even, at times, people walking on the baggage carousel. The slats of the baggage carousel move any baggage on the carousel in the moving direction of the slats at a velocity which is typically 0.3-0.6 m/s.

Extensive loads, both static load such as due to baggage being positioned on and moved by the carousel, but also variable loads, such as due to baggage being loaded onto the carousel by a feeding conveyor or due to baggage being stopped by a person holding a handle or thong of a piece of baggage before or when trying to pull the baggage piece off the carousel, can thus be applied to the carousel. In order to endure these loads, a quite robust structure is of benefit.

In order to achieve such robust structure with such amount of power in a propulsion system of the baggage carousel at a low cost, with a low maintenance and which is also energy efficient, it has been found that the construction as disclosed herein and with a propulsion system as disclosed herein is of benefit.

In this respect it follows herein, that the structure, form and size of moving elements, such as links, support surfaces for the slats, the slats and the propulsion system are provided and positioned in certain ways, as further described herein.

In figure 2 it is illustrated with dashed lines that the slat 206 has an overlapped part 214 of the slat 206 towards front edge 216 of slat 206. The front edge 216 of the slat and also part of the right and left edges 220, 222 of the slat 206 towards said front are overlapped by the third slat 208. The third slat 208 is the slat in front of the second slat 206.

As illustrated both the front edge 216 and a back edge 218 of the slat are concave. It can be seen that the concave form of both the front and the back edge are provided from a left edge of the slat and all along the front and back edge to the right edge of the second slat 206, so as to provide a symmetric and in this case a butterfly shaped form of the slat.

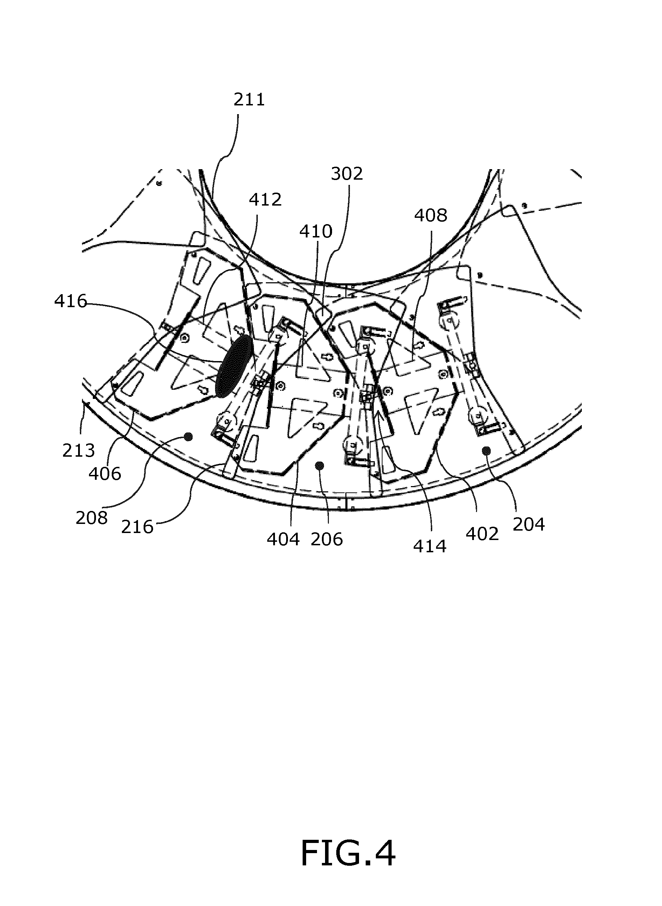

In that the slat is angled slightly downwards in an acute angle relative to horizontal towards the front of the second slat 206 and in that the second slat 206 due to load may be pressed downwards towards a support surface of the third slat 208, it is of benefit to have the concave form of the front edge. This is due to that hereby the support surface 406 (see figure 4) for the third slat 208 in front of the second slat 206, can be increased or at all present without the possibility of the front edge of the second slat 206 overlapping the support surface 406 for a certain size and/or shape of the support surface and/or of the slat.

If or when a slat is rather flexible or somehow, such as when an adult steps onto the carousel, is pressed significantly more downwards than usual, this can, in particular in curves of the carousel, and when the support surface and the slat are not sized and shaped as elaborated herein, have the effect that particularly increased wear occurs on the carousel due to an edge of such bend or deflected and overloaded slat at or below a horizontal level of a support surface of another slat, is forced to move pass a contour of the support surface, and thus pressing towards such surface.

On the other hand it is of benefit that as much of the surface of each slat is supported by a support surface, which support surface is preferable more rigid than the slat, and it has been found that the construction of the baggage carousel as disclosed herein may be seen to provide a low cost, a low maintenance baggage carousel which is also energy efficient.

Thus, the concave shape of the overlapped part of the slat enables a support surface which can be increased in size, without the risk of edges and surfaces being able to unintentionally press against each other, in particular when links with slats move into a curve with the curve radius as the herein mentioned.

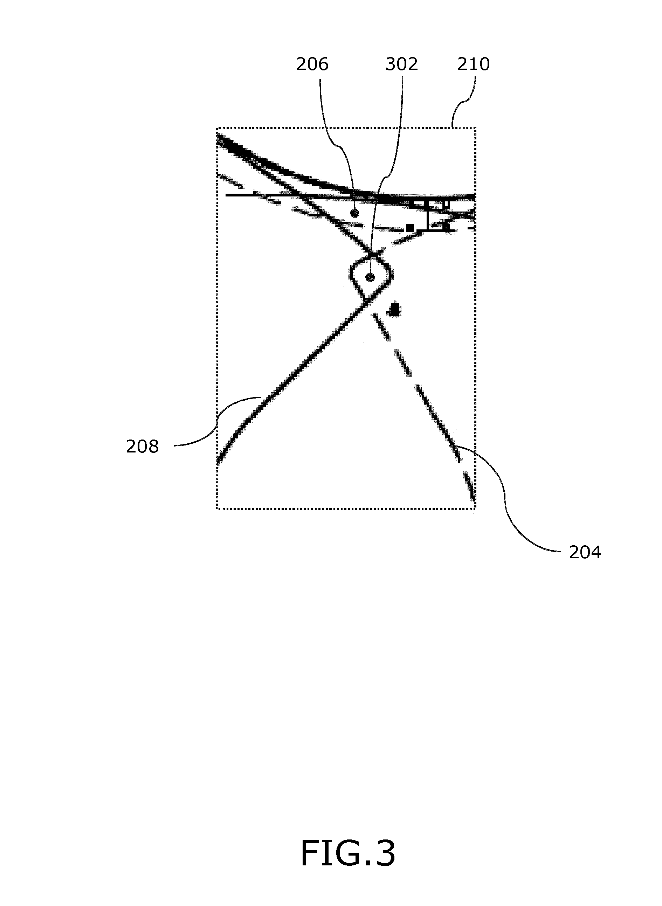

FIG. 3 is a close up of the section 210 of the top view shown in figure 2. It is illustrated that three slats arranged consecutively after each other, a first slat 204, a second slat 206 and a third slat 208, overlap each other in the area 302 towards an inner curvature of the curve. This is provided when the slats are positioned in the curve of the airport baggage carousel and when having a size and form as further described herein and when the slats are supported by and fixed to links of the baggage carousel as further disclosed herein. It can be seen that the second slat 206 is positioned in between the first and the third slats 204, 208, respectively.

The overlap of three slats towards the inner curvature may not be seen of significant benefit towards the inner curvature of the airport baggage carousel, but without these dimensions and these shapes of the links, support surfaces and slats which enables these three slats to overlap towards the inner curvature, the baggage carousel would e.g. not be provided so that two slats would overlap properly or overlap at all towards the outer curvature. Hereby, e.g. a risk of decreased loading strength and/or potential risk of personnel injury could occur especially along the outer curvature of the baggage carousel.

FIG. 4 is the top view of figure 2, but where also support surfaces and links etc. are shown below the slats. Thus, only the outer edges of the slats are shown, as in figure 2, but the support surfaces 402, 404 and 406, the links 408, 410 and 412 with vertical and horizontal wheels are also shown below the slats.

The links 408, 410, 412 are coupled with each other in a chain like structure by use of spherical couplings 414 between the links. By use of such couplings, the links can turn relatively to each other in all directions.

As illustrated, each of the links 408, 410, 412 includes a support surface 402, 404 and 406, respectively. In the illustrated embodiment the support surface is provided by a separate member attached to the link. Alternatively, the link and the support surface can be provided in one monolithic structure, such as a moulded structure.

As illustrated, a single slat is fixed to a single support surface and thus a single link. The support surface has dimensions and form so as at least to have outer contours as close as possible to the edges of the slat which it supports.

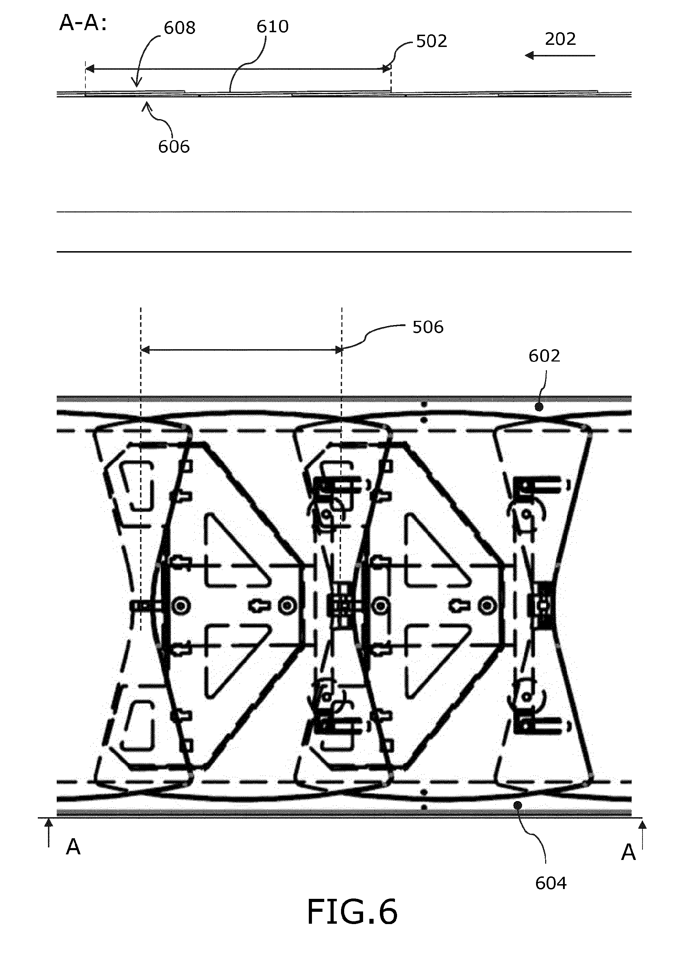

As explained and illustrated in relation to figure 2, and as further illustrated in figure 6, it also follows from figure 4 that the front edge 216 is overlapped by the third slat 208 and is slightly downwards angled in an acute angle towards the front of the second slat 206. Due to loads the slat may be pressed further towards a support surface of the third slat 208. As explained in relation to figure 2, the concave form of the front edge 216 is of benefit in this respect and enables that the support surface 406 can be increased or at all present in this centre area 416, which centre area in the shown embodiment is towards the back most part of the support surface 406.

As illustrated and with the dimension and/or form of the links, support surfaces and slats, the support surfaces abut each other along a straight line towards an inner curvature of the curve. Further, it is illustrated that in a curve with the described radius and with the lengths of the links, the length of the support surface and of the slat, a rearwards outer contour of a support surface, such as the support surface 406, abuts a front edge, such as the front edge 216, of a slat rearwards of the support surface 406. Also this abutment is provided along a straight line towards an inner curvature of the curve. Although the support surfaces abut as explained, the surfaces remain separated from each other, also during any overload of the carousel. Likewise, and although a support surface abut with a consecutive slat edge as explained, these parts also remain separated from each other.

Hereby a rigid support construction with an increased support area has been provided in a cost effective manner, and in a manner which reduces maintenance.

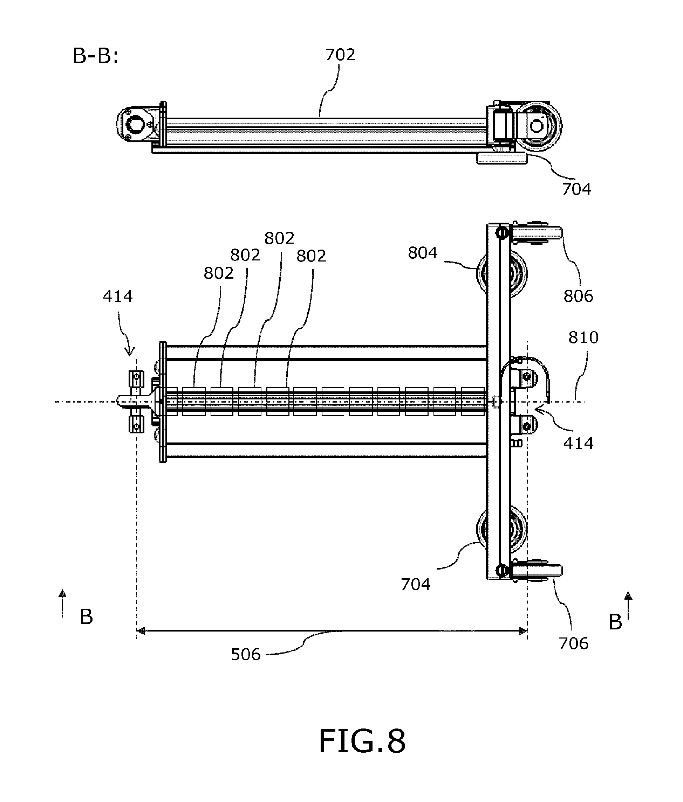

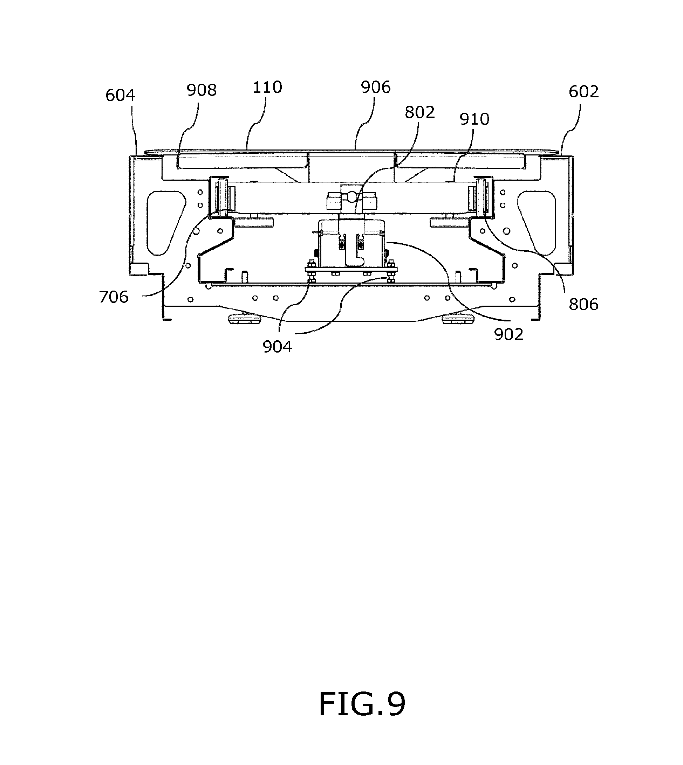

Further, these benefits and the robustness and cost effectiveness of the baggage carousel is provided for an airport baggage carousel with links which is far longer than links for existing carousels. The increased length of the links increases the energy effectiveness of the propulsion system, as will be explained in relation to figure 8 and 9.

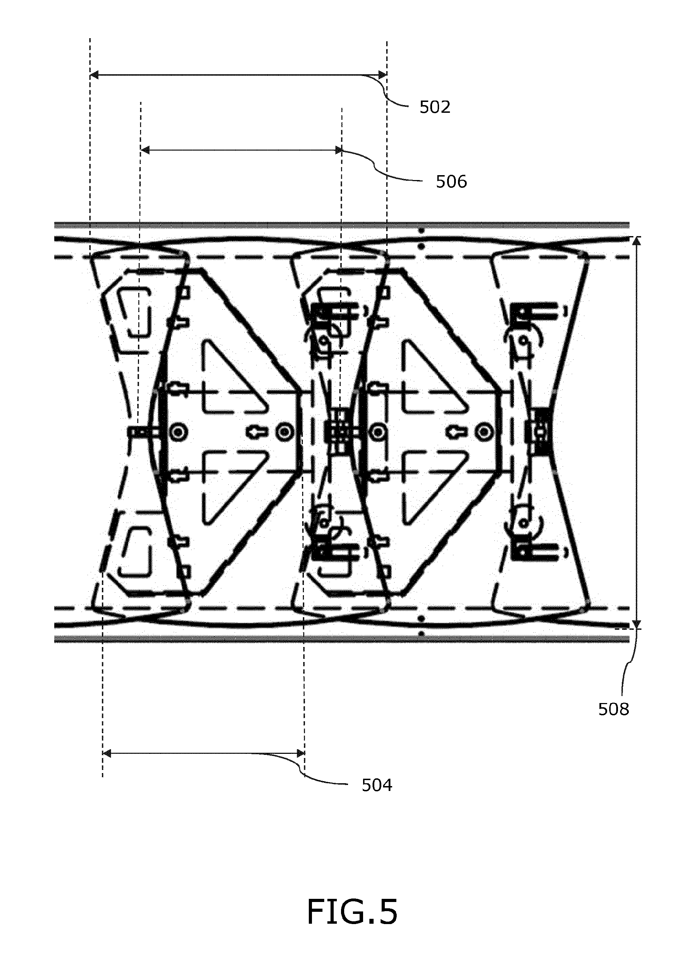

FIG. 5 is a top view of the baggage carousel in a straight section of the carousel. The end to end dimension of the slat in the moving direction of the carousel is the slat length 502. The dimension from the two front most corners of the support surface and to the rearmost contour of the support surface is the support surface length 504. The dimension between the couplings is the link length 506. It follows from the figure that the slat length 502 is longer than the support surface length 504. Furthermore it follows that the support surface length 504 is substantially the same as the link length 506. The figure is provided in about 1:10 format and the link length in the illustrated embodiment is 500 mm. The slat width 508 in the illustrated embodiment is about 980 mm.

FIG. 6 is a top view as well as a side view of the straight section of the track, shown in figure 5 and in the same 1:10 format. It is illustrated that the track comprises a first sliding surface 602 towards a first side of the track and a second sliding surface 604 towards a second side of the track. On said first and second sliding surfaces the slats slide and are at least partly supported, at least when load is applied to the slats. These sliding surfaces support the slats in the vertical direction in addition to vertical wheels of the links.

From the side view A-A it follows that the sliding surfaces are flat. Further it follows that the overlapped part 606 pointed towards with the arrow 606 of the side view slat 610 is overlapped by an overlapping part 608 of an adjacent consecutive slat. It also follows that the slats are supported so as to be slightly tilted from horizontal and that they are adapted to overlap each other.

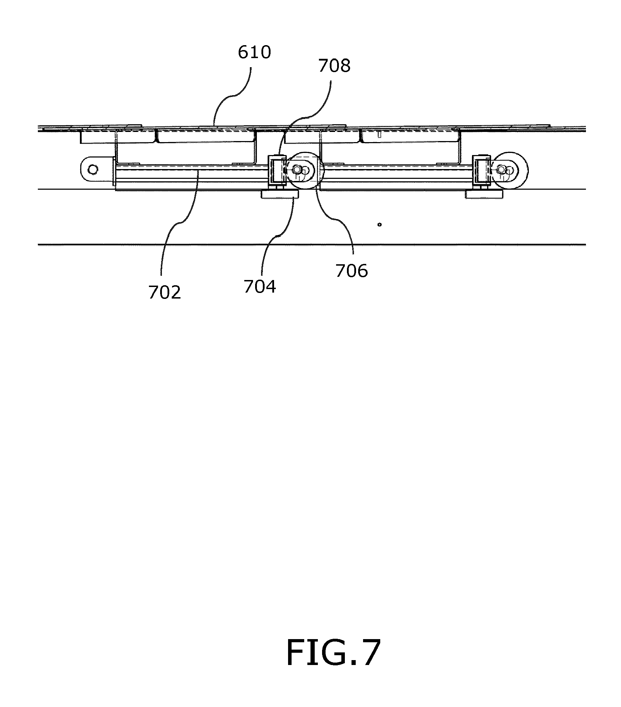

FIG. 7 is the side view of the straight section of the track shown in figure 5 where also support surfaces and links etc. are shown. Thus, side panels of the carousel etc. are drawn as if they were transparent. It can be seen that the side view link 702 includes a horizontal wheel 704 towards a left side of the link, and that each link includes a vertical wheel 706 towards a left side of the link, when seen in the driving direction of the link and that the vertical wheel is hinged at the hinge 708 so as to enable the wheel to follow the left and right curved airport baggage carousel track. Right side horizontal and vertical wheels 804, 806, are also included, as follows from figures 8 and 9, but are in figure 7 hidden behind the left side wheels.

FIG. 8 is the top view and a side view B-B of the link 702. The figure illustrates that the link opposite a direction towards where the slat is to be positioned, thus towards a lowermost side of the link, when the link is installed in the airport baggage carousel, includes a plurality of permanent magnets 802. The permanent magnets are arranged one after another in a row in the moving direction all along the length of the link. As seen, the magnets are provided in the middle of the link along a centerline 810 of the link. In the figure the permanent magnets are drawn as if they can be seen through the link from above.

FIG. 9 is a cross-sectional view of the baggage carousel perpendicular to the moving direction 202 of the airport baggage carousel. The figure illustrates a primary and stationary part of the propulsion system for the airport baggage carousel. The primary part 902 includes vertical adjustment means 904 for vertical adjustment of the primary part and the primary part comprises a stator. The stator typically comprises a number of powered coils which are controlled to provide a travelling field for cooperating with the permanent magnets 802 of the secondary part and so as to provide a movement of the secondary part in the moving direction 202.

When compared to existing propulsion systems for airport baggage carousels, such propulsion system enables a quiet and low maintenance airport baggage carousel to be provided. These benefits are also due to and significantly and synergistically increased by the propulsion system being used with the shown position and the herein elaborated lengths and positions, e.g. of the slats and/or the support surfaces and/or the links.

The baggage carousel is illustrated to be provided with a baggage carousel surface 110 which is flat, i.e. horizontal, but the baggage support surface 110 may be provided with an inclination perpendicular to the moving direction and relative to a horizontal floor and thus the principles described herein can be used for both flat and such inclined baggage carousels.

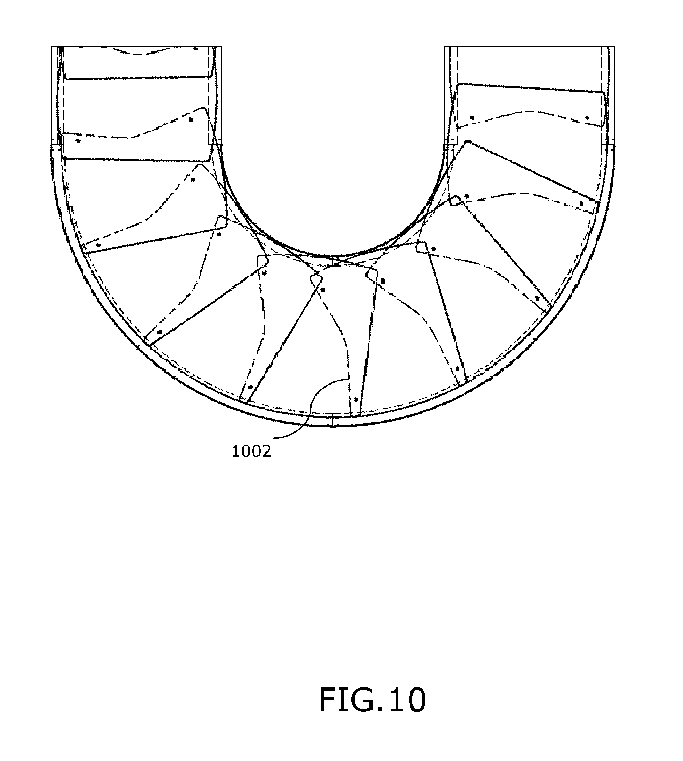

FIG. 10 is a top view of a baggage carousel with slats with concave front edges 1002, but where the back edges are straight as can be seen from the figure.

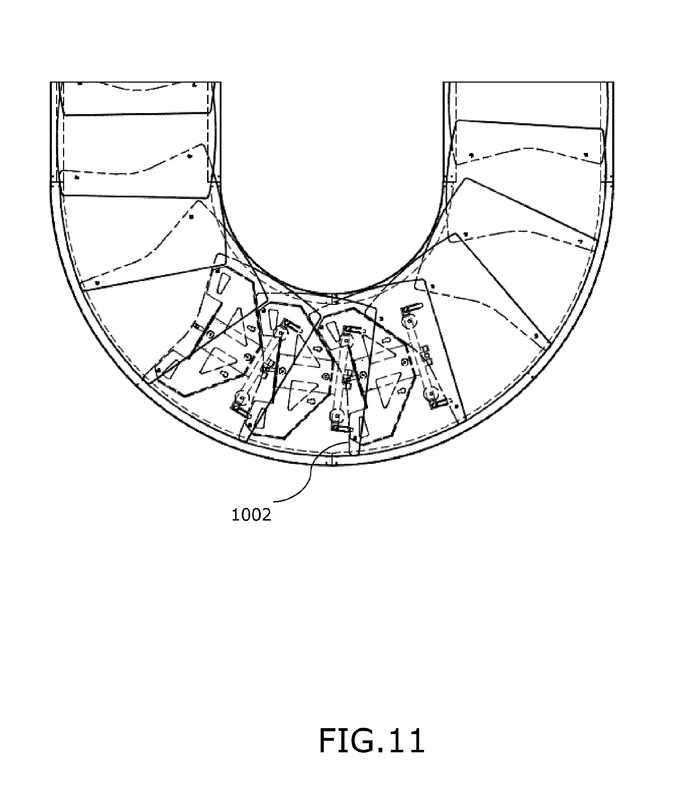

FIG. 11 is a top view of the carousel in figure 10 although with transparent slats. It can be seen that the concave front edge 1002 provides the benefits of an increased surface area of the support, without the support and the front edge of the slat overlapping, as previously described.

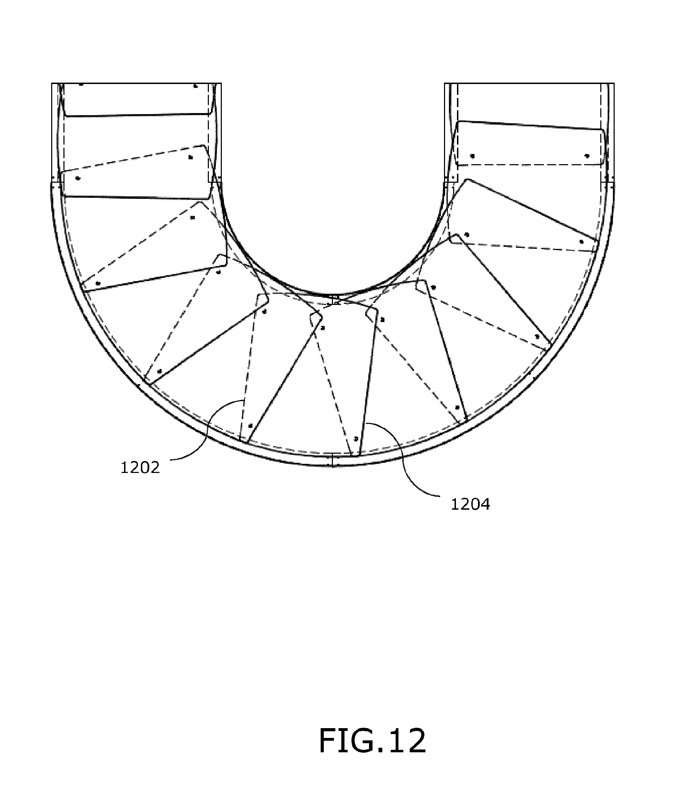

FIG. 12 is a top view of a baggage carousel with slats with straight front and back edges 1202 and 1204, respectively.

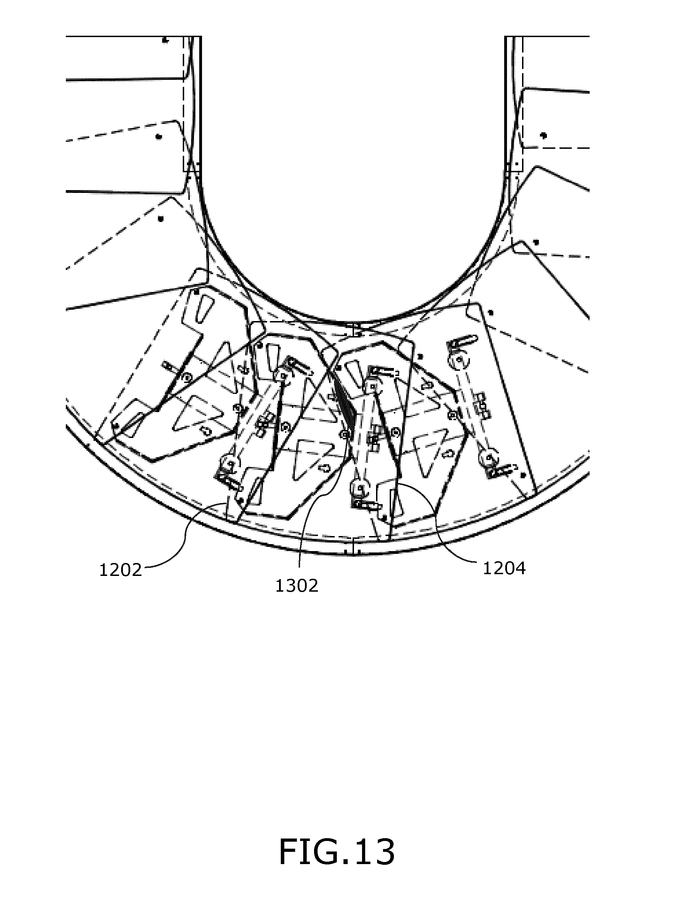

FIG. 13 is a top view of the carousel in figure 12 although with transparent slats. From the figure it follows that in the curve, the baggage carousel having slats with straight front edges overlaps a following support surface in the part 1302, when driven through a curve. This may be seen to be less preferred than other solutions, among others in that this may cause additional friction and e.g. lead to increased wear and/or increased use of energy to move the slats, in particular with various loads, through the curve. The area 1302 is only shown for a right curve.

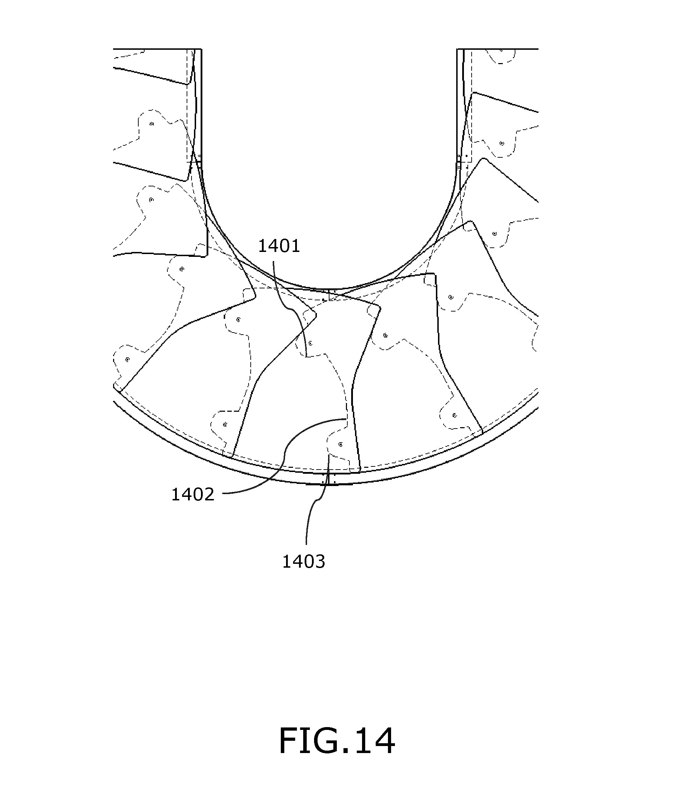

FIG. 14 is a top view of a part of a curve of a baggage carousel where each of the slats have a front edge 1402 with protrusions 1401, 1403 in the front edge of the slat.

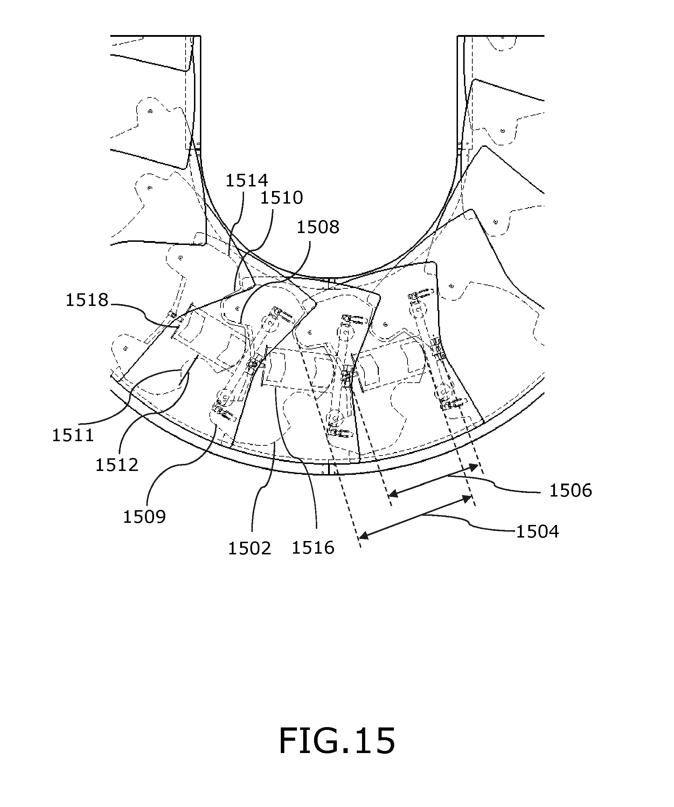

FIG. 15 is a top view of a carousel where support surfaces are provided with support protrusions and indentations. It can be seen that the support surface length 1504 is longer than the link length 1506. Further, it follows that the support surface 1502 comprises two support protrusions 1508 and 1509 protruding in the moving direction. Each of the right and left side support protrusions 1508 and 1509, respectively, fits into an indentation 1510, 1511 of a consecutive support surface 1514, when adjacent links 1516, 1518 with their adjacent supporting surfaces move through the curve.

Whereas the shown protrusions protrude in the moving direction and fits into indentations of a support surface in front of them, the protrusions may also protrude backwards in a direction opposite to the moving direction and fit into indentations of a support surface behind them.

As illustrated the indentation 1510 has a form so that a line 1512 perpendicular to the moving direction and across the indentation intersects an edge of the indentation at two points.

It is illustrated in the figure that the support protrusions 1508 and 1509 in the support surface have the same or similar shape of the slat protrusions 1401, 1403. Further, it can be seen that the protrusions in the slat and the support surface have the same or similar size. Further it is illustrated that the protrusions in the slat overlap the protrusions in the support surface and that their respective edges are following or substantially following each other.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.
- 102: airport baggage carousel
- 104: baggage carousel track
- 106: curve radius
- 108: track width
- 110: baggage carousel surface
- 202: moving direction of slats in track
- 204: first slat
- 206: second slat
- 208: third slat
- 210: close up area
- 211: inner curvature of curve
- 212: right curve
- 213: outer curvature of curve
- 214: overlapped part of slat 206 towards front of slat 206
- 216: front edge of slat 206
- 218: back edge of slat 206
- 220: left edge of slat 206
- 222: right edge of slat 206
- 302: area in which three slats overlaps
- 402: first support surface
- 404: second supprt surface
- 406: third support surface
- 408: first link
- 410: second link
- 412: third link
- 414: coupling between links
- 416: centre area where support surface can be increased
- 502: slat length
- 504: support surface length
- 506: link length
- 508: slat width
- 602: first sliding surface
- 604: second sliding surface
- 606: overlapped part
- 608: overlapping part
- 610: side view slat
- 702: side view link
- 704: left side horizontal wheel
- 706: left side vertical wheel
- 708: hinge for horizontal wheel
- 802: permanent magnets
- 804: right side horizontal wheel
- 806: right side vertical wheel
- 810: Centerline
- 902: primary, stationary parts of the propulsion system
- 904: vertical adjustment means of 902
- 906: end view slat
- 908: end view slat support surface
- 910: end view link
- 1002: straight front edge of figure 10 slat
- 1202: straight front edge of figure 12 slat
- 1204: straight back edge of figure 12 slat
- 1302: area where figure 12 slat front edge overlaps adjacent support
- 1401: right side slat protrusion on figure 14 slat front edge
- 1402: front edge of figure 14 slat with protrusions
- 1403: left side slat protrusion on figure 14 slat front edge
- 1502: support with indentations and protrusions
- 1504: support surface length of figure 15 embodiment
- 1506: link length of figure 15 embodiment
- 1508: right side support protrusion
- 1509: left side support protrusion
- 1510: right side indentation
- 1511: left side indentation
- 1512: line across indentation
- 1514: consecutive support surface
- 1516: second link in figure 15
- 1518: third link in figure 15

## Claims

1. An airport baggage carousel (102) with a track (104) having a curve (212) with a curve radius of less than 1500 mm, the airport baggage carousel comprising an endless loop of a plurality of interconnected links (408, 410, 412) moveable in a moving direction (202) in the track using a propulsion system (802, 902) and wheels (704, 706, 804, 806), where
each link has a length (506) and each link includes a support surface (404, 1502), where the support surface supports a slat (206) for moving baggage on the carousel, and where slats (204, 206, 208) are formed so as to form a baggage carousel with an upwards closed baggage carousel surface (110) for the baggage also during the curve (212) with said curve radius, wherein a secondary, movable part (802) of the propulsion system (802, 902) is provided on one or more links (408, 410, 412), and wherein the secondary part comprises a plurality of permanent magnets (802) arranged after each other in a row in the moving direction (202), and wherein the secondary moveable part (802) cooperates with one or more primary, stationary parts (902) of the propulsion system, where said one or more primary parts comprises a stator cooperating with the secondary part so as to provide a movement of the secondary part in the moving direction (202).

2. The airport baggage carousel according to claim 1, wherein the support surface length (504) is at least the same length as the link length (506).

3. The airport baggage carousel according to claim 1 or 2, wherein the support surface length (504, 1504) is longer than the link length (506).

4. The airport baggage carousel according to any of the preceding claims, wherein the support surface (1502) comprises one or more support protrusions (1508).

5. The airport baggage carousel according to claim 4, wherein the support surface comprises an indentation, and a support protrusion (1508) of the support surface (1502) fits into an indentation (1510) of a consecutive support surface when adjacent links with their adjacent supporting surfaces move through said curve.

6. The airport baggage carousel according to claim 5, wherein the indentation (1510) has a form so that a line (1512) perpendicular to the moving direction (202) and across the indentation intersects an edge of the indentation at two points.

7. The airport baggage carousel according to any of the preceding claims, wherein the slats have a relative position, size and a shape so that three slats (204, 206, 208) arranged after each other at least partly overlaps each other in an area (302) towards an inner curvature (211) of the curve with said curve radius.

8. The airport baggage carousel according to any of the preceding claims, wherein the slat length (502) is the same as a support surface length (504) or longer than the support surface length.

9. The airport baggage carousel according to any of the preceding claims, wherein the slats (204, 206, 208) are supported so as to be slightly tilted from horizontal and so that they are hereby adapted to overlap each other.

10. The airport baggage carousel according to any of the preceding claims, wherein each link (408, 410, 412) is having a link length (506) of at least 400 mm, such as at least 425 mm, more preferred at least 475 mm.

11. The airport baggage carousel according to any of the preceding claims, wherein a ratio of the link length (506) divided by a slat width (508) is at least 0.4, such as at least 0.45.

12. The airport baggage carousel according to any of the preceding claims, wherein at least one of a back edge (218) and a front edge (216) of a slat (206), when seen in the moving direction (202), is provided with a concave form, so as hereby to enable provision of an increased centre area (416) of an adjacent support surface (406).

13. The airport baggage carousel according to any of the preceding claims, wherein both a back edge (218) and a front edge (216) of the slat, when seen in the moving direction, are provided with a concave form.

14. The airport baggage carousel according to claim 12 or 13, wherein the concave form is provided from a left edge (220) of the slat and all the way to the right edge (222) of the slat.

15. The airport baggage carousel according to claim 14 when dependent to claim 13, wherein the overall form of the slat is provided so as to have a butterfly shaped form.

16. The airport baggage carousel according to any of the preceding claims, wherein each link (408, 410, 412) includes a horizontal wheel (704) towards a left side of the link and a horizontal wheel (804) towards a right side of the link, and each link includes a vertical wheel (706) towards a left side of the link and a vertical wheel (806) towards a right side of the link, the vertical wheels being provided with a hinge (708) so that they are able to follow the track.

17. The airport baggage carousel according to any of the preceding claims, wherein the link (410) and the support surface (404) are comprised in one monolithic structure.

18. The airport baggage carousel according to any of the preceding claims, wherein the track comprises a first sliding surface (602) towards a first side of the track and a second sliding surface (604) towards a second surface of the track on which first and second sliding surfaces (602, 604) the slats slide and are at least partly supported at least when load is applied to the slats.
